(19) Europäisches Patentamt
European Patent Office
Office européen des brevets

(11) Veröffentlichungsnummer: **0 136 615 B1**

(12) **EUROPÄISCHE PATENTSCHRIFT**

(45) Veröffentlichungstag der Patentschrift: **20.04.88**

(51) Int. Cl.[4]: **C 07 C 101/36**, C 07 C 103/46, A 01 N 53/00

(21) Anmeldenummer: **84111095.0**

(22) Anmeldetag: **18.09.84**

(54) **1-Methylamino-cyclopropan-1-carbonsäure-Derivate.**

(30) Priorität: **30.09.83 DE 3335514**

(43) Veröffentlichungstag der Anmeldung: **10.04.85 Patentblatt 85/15**

(45) Bekanntmachung des Hinweises auf die Patenterteilung: **20.04.88 Patentblatt 88/16**

(84) Benannte Vertragsstaaten: **AT BE CH DE FR GB IT LI NL**

(56) Entgegenhaltungen:
**EP - A - 0 005 782**

**SYNTHESIS, Nr. 1, 1978, Seite 46, Georg Thieme Publishers, Stuttgart, DE; D.H. RICH u.a.: "A convenient synthesis of the amino acid, 1-amino-cyclopropane-1-carboxylic acid"**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Lunkenheimer, Winfried, Dr., Bismarckstrasse 29, D-5600 Wuppertal 1 (DE)**
Erfinder: **Lürssen, Klaus, Dr., August-Kierspel-Strasse 151, D-5060 Bergisch-Gladbach 2 (DE)**

**EP 0 136 615 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue 1-Methylamino-cyclopropan-1-carbonsäure-Derivate, mehrere Verfahren zu ihrer Herstellung und ihre Verwendung als Pflanzenwachstumsregulatoren.

Es ist bereits bekannt, dass die am Stickstoffatom unsubstituierte 1-Amino-cyclopropancarbonsäure und deren Hydrochlorid pflanzenwachstumsregulierende Eigenschaften besitzen (vgl. EP-A 0 005 782 und EP-A 0 025 141).

Die Wirkung dieser Verbindungen ist jedoch insbesondere bei niedrigen Aufwandmengen und Konzentrationen nicht immer voll zufriedenstellend. Ausserdem werden in den genannten Druckschriften keine 1-Amino-cyclopropan-carbonsäure-Derivate offenbart, in denen das Stickstoffatom der Amino-Gruppe eine Methyl-Gruppe trägt.

In dem Artikel, der in Synthesis 1978, 46 erschienen ist, werden einige 1-Amino-cyclopropan-carbonsäure-Derivate beschrieben. Keine dieser Verbindungen enthält jedoch einen Formyl- oder Acyl-Rest am Stickstoffatom der Amino-Gruppe.

Es wurden nun neue 1-Methylamino-cyclopropan-1-carbonsäure-Derivate der allgemeinen Formel (I)

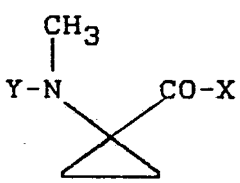

(I)

in welcher

X für Hydroxy, gegebenenfalls durch Hydroxy, Halogen, Amino, Alkylamino mit 1 bis 4 Kohlenstoffatomen, Dialkylamino mit 1 bis 4 Kohlenstoffatomen je Alkylgruppe, N-Acylamino, Alkoxy mit 1 bis 4 Kohlenstoffatomen, Acyloxy, Cycloalkyl mit 3 bis 7 Kohlenstoffatomen und/oder Phenyl substituiertes Alkoxy mit 1 bis 18 Kohlenstoffatomen, ferner für Amino oder Alkylamino mit 1 bis 4 Kohlenstoffatomen steht und

Y für Wasserstoff oder Formyl steht,

sowie deren pflanzenverträgliche Säureadditionssalze gefunden.

Weiterhin wurde gefunden, dass sich die neuen 1-Methylamino-cyclopropan-1-carbonsäure-Derivate der allgemeinen Formel (I) sowie deren pflanzenverträgliche Säureadditionssalze nach mehreren Verfahren herstellen lassen. So erhält man Verbindungen der Formel (I), indem man

a) 1-Acylamino-Cyclopropan-1-carbonsäureester der Formel

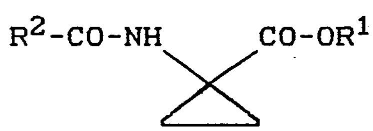

(II)

in welcher

$R^1$ für Methyl oder Ethyl steht und

$R^2$ für Wasserstoff steht,

mit einem Methylierungsmittel der Formel

$CH_3$-Z (III)

Z für Halogen, einen Methylsulfat-, p-Toluolsulfonat- oder für einen Mesitylensulfonat-Rest steht, gegebenenfalls in Gegenwart eines Verdünnungsmittels und gegebenenfalls in Gegenwart eines Säurebindemittels umsetzt, oder

b) 1-(N-Acyl-methylamino)-cyclopropan-1-carbonsäureester der Formel

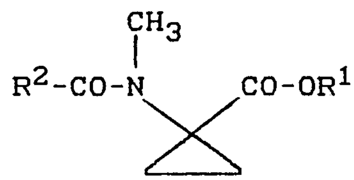

(Ia)

in welcher

$R^1$ und $R^2$ die oben angegebene Bedeutung haben, mit wässriger Salzsäure gegebenenfalls in Gegenwart eines Verdünnungsmittels umsetzt, oder

c) 1-(N-Formyl-methylamino)-cyclopropan-1-carbonsäure-Derivate der Formel

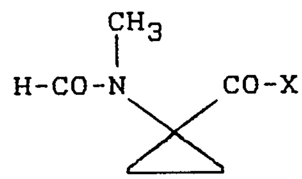

(Id)

in welcher

X die oben angegebene Bedeutung hat, mit wässriger Salzsäure gegebenenfalls in Gegenwart eines Verdünnungsmittels umsetzt, oder

d) Verbindungen der Formel

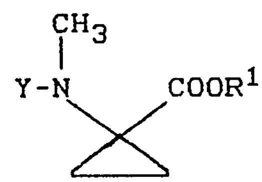

(If)

in welcher

Y und $R^1$ die oben angegebene Bedeutung haben,

α) mit Alkoholen der Formel (IV),

$R^3$OH (IV)

in welcher

$R^3$ für gegebenenfalls durch Hydroxy, Halogen, Amino, Alkylamino mit 1 bis 4 Kohlenstoffatomen, Dialkylamino mit 1 bis 4 Kohlenstoffatomen je Alkylgruppe, Acylamino, Alkoxy mit 1 bis 4 Kohlenstoffatomen, Acyloxy, Cycloalkyl mit 3 bis 7 Kohlenstoffatomen und/oder Phenyl substituiertes Alkoxy mit 1 bis 18 Kohlenstoffatomen steht, gegebenenfalls in Gegenwart eines Verdünnungsmittels und gegebenenfalls in Gegenwart

eines Katalysators umsetzt, oder

β) mit Aminen der Formel (V)

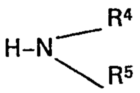

(V)

in welcher
$R^4$ für Wasserstoff steht und
$R^5$ für Wasserstoff oder Alkyl mit bis zu 4 Kohlenstoffatomen steht,
gegebenenfalls Verdünnungsmittels umsetzt, oder

e) 1-Methylamino-cyclopropan-1-carbonsäure-Derivate der Formel

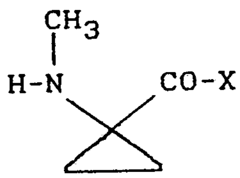

(Ih)

in welcher
X die oben angegebene Bedeutung hat,
mit einem Acylierungsmittel der Formel (VI)

$Y^1$-A (VI)

in welcher
$Y^1$ für Formyl steht und
A für Halogen, Aktivester-Reste, Anhydrid-Reste oder für den N,N'-Dicyclohexylcarbodiimid-Addukt-Rest der Formel

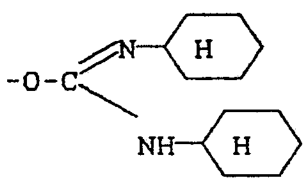

steht,
gegebenenfalls in Gegenwart eines Verdünnungsmittels und gegebenenfalls in Gegenwart eines Säurebindemittels sowie gegebenenfalls in Gegenwart eines Katalysators umsetzt, oder

f) 1-Methylamino-cyclopropan-1-carbonsäuren der Formel

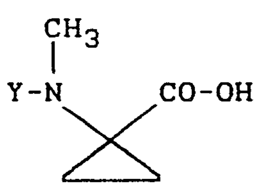

(Ij)

in welcher
Y die oben angegebene Bedeutung hat,

α) mit Alkoholen der Formel (IV)

$R^3$-OH (IV)

in welcher
$R^3$ die oben angegebene Bedeutung hat,
gegebenenfalls in Gegenwart eines Verdünnungsmittels, gegebenenfalls in Gegenwart eines Säurebindemittels und gegebenenfalls in Gegenwart eines geeigneten Aktivierungsmittels oder Katalysators umsetzt, oder

β) mit Aminen der Formel (V)

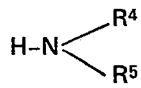

(V)

in welcher
$R^4$ und $R^5$ die oben angegebene Bedeutung haben, gegebenenfalls in Gegenwart eines Verdünnungsmittels, gegebenenfalls in Gegenwart eines Säurebindemittels und gegebenenfalls in Gegenwart eines geeigneten Aktivierungsmittels umsetzt, oder

g) 1-Methylamino-cyclopropan-1-carbonsäure-Salze der Formel

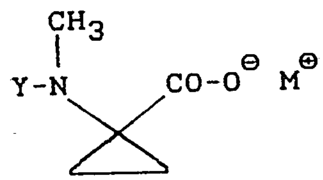

(Il)

in welcher
Y die oben angegebene Bedeutung hat und
$M^{\oplus}$ für ein Natrium- oder Kaliumion steht,
mit einer Verbindung der Formel (VIII)

$R^3$-Z (VIII)

in welcher
$R^3$ und Z die oben angegebene Bedeutung haben, gegebenenfalls in Gegenwart eines Verdünnungsmittels umsetzt, und gegebenenfalls anschliessend an die Verbindungen der Formel (I) eine Säure addiert, die zu einem pflanzenverträglichen Salz führt.

Schliesslich wurde gefunden, dass die neuen 1-Methyl-amino-cyclopropan-1-carbonsäure-Derivate der Formel (I) und deren pflanzenverträgliche Säureadditionssalze pflanzenwuchsregulierende Eigenschaften besitzen.

Überraschenderweise besitzen die neuen 1-Methylamino-cyclopropan-1-carbonsäure-Derivate der Formel (I) und deren pflanzenverträgliche Säureadditionssalze bessere pflanzenwuchsregulierende Eigenschaften als die am Stickstoffatom unsubstituierte 1-Amino-cyclopropan-1-carbonsäure bzw. deren Hydrochlorid, welches chemisch und wirkungsmässig naheliegende Substanzen sind.

Die erfindungsgemässen 1-Methylamino-cyclopropan-1-carbonsäure-Derivate sind durch die Formel (I) allgemein definiert.

Bevorzugt sind Verbindungen der Formel (I), in denen
X für Hydroxy, Methoxy, Ethoxy, n- und i-Propoxy, n-, i-, s- und t-Butoxy, für n-Hexyloxy, n-Octyloxy, n-Dodecyloxy, für 2-Hydroxyethoxy, 2-Bromethoxy, 2-Chlorethoxy, 2-Aminoethoxy,

2-(Methylamino)-ethoxy, 2-(Dimethylamino)-ethoxy, 2-(Formylamino)-ethoxy, 2-(Acetylamino)-ethoxy, 2-Methoxyethoxy, 2-Ethoxyethoxy, 2-Acetoxyethoxy, für Cyclopropylmethoxy, für Cyclohexylmethoxy, für Benzyloxy, für Amino, Methylamino oder Ethylamino steht und

Y für Wasserstoff oder Formyl steht.

Bevorzugte erfindungsgemässe Stoffe sind auch pflanzenverträgliche Säureadditions-Salze von 1-Methylaminocyclopropan-1-carbonsäure-Derivaten der Formel (I), in denen X und Y die oben angegebenen vorzugsweisen Bedeutungen haben.

Besonders bevorzugt sind dabei diejenigen Salze, die durch Addition der folgenden Säuren entstehen: Chlorwasserstoffsäure, Bromwasserstoffsäure, Phosphorsäure, Salpetersäure, Schwefelsäure, p-Toluolsulfonsäure, mono- und bifunktionelle Carbonsäuren, wie z.B. Essigsäure, Maleinsäure, Bernsteinsäure und Fumarsäure.

Im einzelnen seien ausser den bei den Herstellungsbeispielen genannten Verbindungen die folgenden Verbindungen der allgemeinen Formel (I) genannt:

Tabelle I

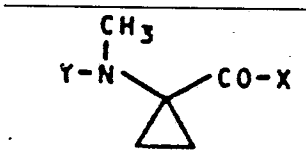

(I)

| X | Y |
|---|---|
| $CH_3O$- | H-CO- |
| $C_2H_5O$- | H |
| $C_2H_5O$- | H-CO- |
| n-$C_8H_{17}$-O- | H |
| n-$C_8H_{17}$-O- | H-CO- |
| $CH_3O$-$CH_2$-O- | H |
| $CH_3O$-$CH_2$-O- | H-CO- |
| H-CO-NH-$CH_2$-$CH_2$-O- | H |
| H-CO-NH-$CH_2$-$CH_2$-O- | H-CO- |
| $(CH_3)_2N$-$CH_2$-$CH_2$-O- | H |
| $(CH_3)_2N$-$CH_2$-$CH_2$-O- | H-CO- |
| 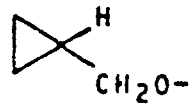 | H |
| 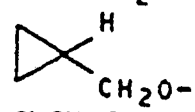 | H-CO |
| Cl-$CH_2$-$CH_2$-O- | H |
| Cl-$CH_2$-$CH_2$-O- | H-CO- |
| Br-$CH_2$-$CH_2$-O- | H |
| Br-$CH_2$-$CH_2$-O- | H-CO- |
| HO-$CH_2$-$CH_2$-O- | H |
| HO-$CH_2$-$CH_2$-O- | H-CO- |
| $CH_3$-CO-O-$CH_2$-$CH_2$-O- | H |
| $CH_3$-CO-O-$CH_2$-$CH_2$-O- | H-CO- |
| -$NH_2$ | H |
| -$NH_2$ | H-CO- |
| -$NHCH_3$ | H |
| -$NHCH_3$ | H-CO- |

Verwendet man 1-(N-Acetyl-methylamino)-cyclopropan-1-carbonsäure-ethylester als Ausgangsstoff und konzentrierte wässrige Salzsäure als Reaktionskomponente, so kann der Ablauf des erfindungsgemässen Verfahrens (b) durch das folgende Formelschema veranschaulicht werden:

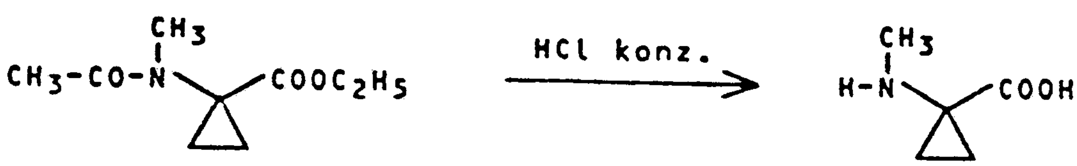


Verwendet man 1-(N-Formyl-methylamino)-cyclopropan-1-carbonsäure-n-octylester als Ausgangsstoff und verdünnte wässrige Salzsäure als Reaktionskomponente, so kann der Ablauf des erfindungsgemässen Verfahrens (c) durch das folgende Formelschema veranschaulicht werden:

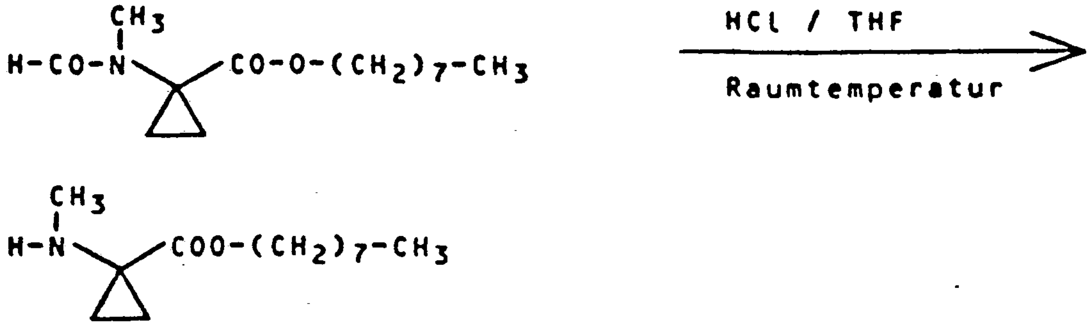

Verwendet man 1-(N-Acetyl-methylamino)-cyclopropan-1-carbonsäure-ethylester und n-Octanol als Ausgangsstoffe und Titan-tetra-ethylat als Katalysator, so kann der Ablauf des erfindungsgemässen Verfahrens (d, Variante α) durch das folgende Formelschema veranschaulicht werden:

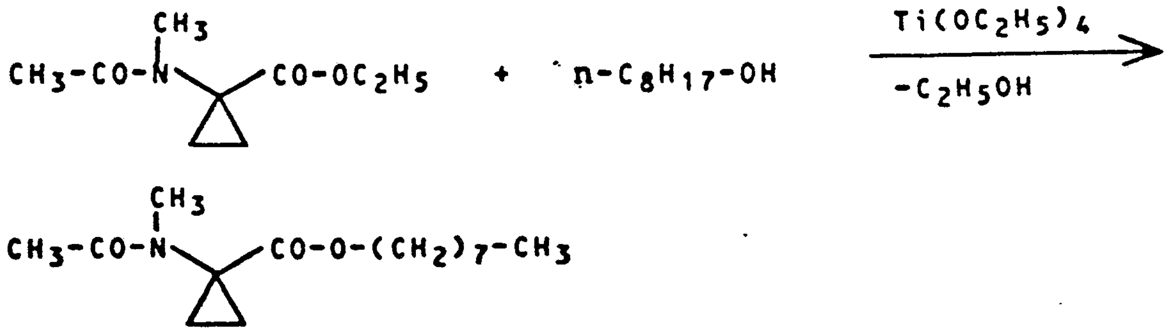


Verwendet man 1-Methylamino-cyclopropan-carbonsäure-1-methylester und Methylamin als Ausgangsstoffe, so kann der Ablauf des erfindungsgemässen Verfahrens (d, Variante β) durch das folgende Formelschema veranschaulicht werden:

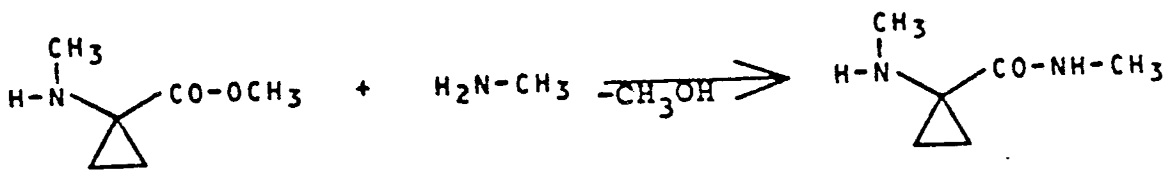


Verwendet man 1-Methylamino-cyclopropan-1-carbonsäuremethylester und Ameisensäureethylester als Ausgangsstoffe, so kann der Ablauf des erfindungsgemässen Verfahrens (e) durch das folgende Formelschema veranschaulicht werden:

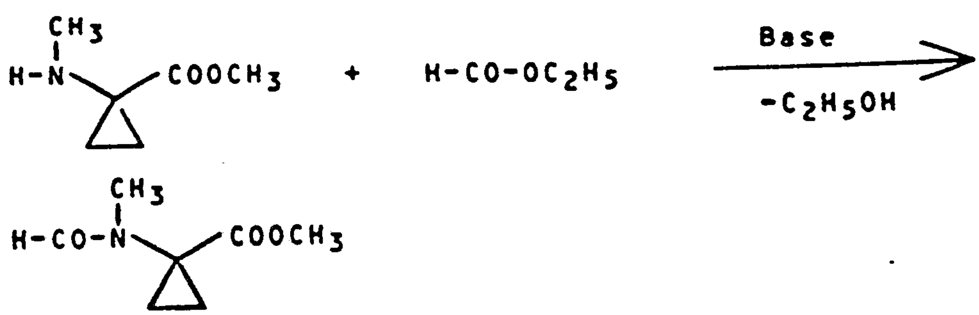


Verwendet man 1-Methylamino-cyclopropan-1-carbonsäure und Methanol als Ausgangsstoffe und Thionylchlorid als Katalysator, so kann der Ablauf des erfindungsgemässen Verfahrens (f, Variante α) durch das folgende Formelschema veranschaulicht werden:

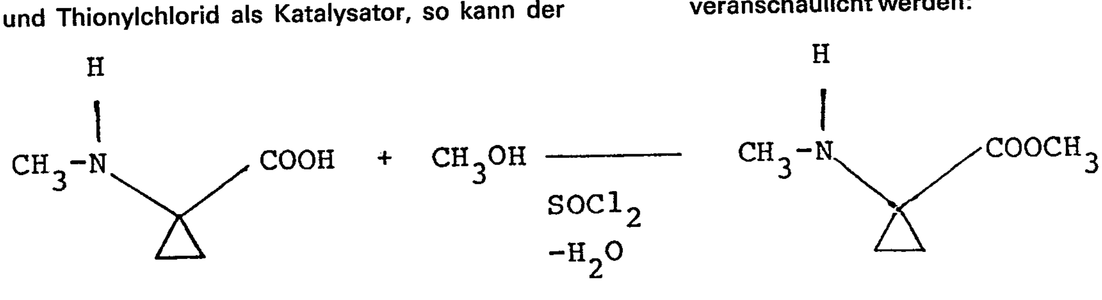


Verwendet man 1-(N-Formyl-methylamino)-cyclopropan-1-carbonsäure und Diethylamin als Ausgangsstoffe und N,N'-Dicyclohexyl-carbodiimid als Aktivator, so kann der Ablauf des erfindungsgemässen Verfahrens (f, Variante β) durch das folgende Formelschema veranschaulicht werden:

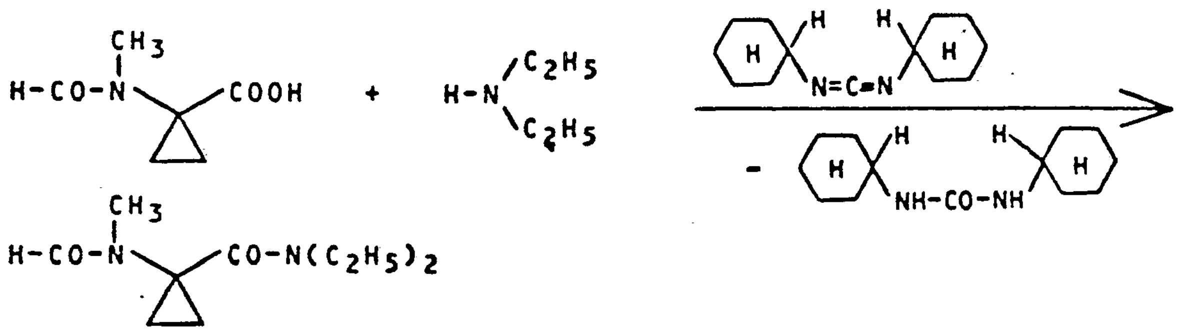

Verwendet man 1-Methylamino-cyclopropan-1-carbonsäure-Natriumsalz und Benzylchlorid als Ausgangsstoffe, so kann der Ablauf des erfindungsgemässen Verfahrens (g) durch das folgende Formelschema veranschaulicht werden:

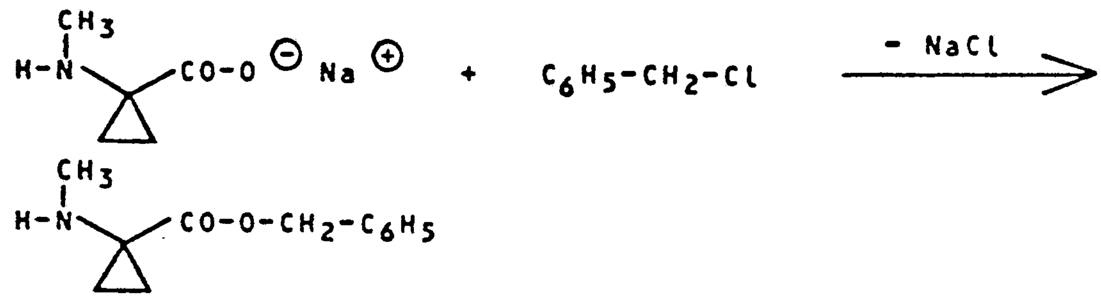


Die zur Durchführung des erfindungsgemässen Verfahrens (a) als Ausgangsstoffe benötigten 1-Acylamino-cyclopropan-1-carbonsäureester sind durch die Formel (II) allgemein definiert.

Die 1-Acylamino-cyclopropan-1-carbonsäureester der Formel (II) sind bekannt (vgl. z.B. EP-A 0 005 782 und EP-A 0 025 141).

Die weiterhin zur Durchführung des Verfahrens (a) als Ausgangsstoffe benötigten Methylierungsmittel sind durch die Formel (III) allgemein definiert. In dieser Formel (III) steht Z für Halogen, insbesondere Brom oder Iod, für einen Methylsulfatrest, für einen p-Toluolsulfonatrest oder für einen Mesitylensulfonatrest.

Die Methylierungsmittel der Formel (III) sind allgemein bekannte Verbindungen der organischen Chemie.

Die zur Durchführung des erfindungsgemässen Verfahrens (b) als Ausgangsstoffe benötigten 1-(N-Acyl-methyl-amino)-cyclopropan-1-carbonsäureester sind durch die Formel (Ia) allgemein definiert.

Die 1-(N-Acyl-methylamino)-cyclopropan-1-carbonsäureester der Formel (Ia) sind erfindungsgemässe Verbindungen und nach Verfahren (a) erhältlich.

Ausgenommen ist der 1-(N-Acetyl-methylamino)-cyclopropan-1-carbonsäuremethylester. Diese Verbindung ist bekannt (vgl. Nature 219, 498 [1968]).

Als Reaktionskomponente verwendet man bei dem erfindungsgemässen Verfahren (b) vorzugsweise konzentrierte wässrige Salzsäure.

Die zur Durchführung des erfindungsgemässen Verfahrens (c) als Ausgangsstoffe benötigten 1-(N-Formyl-methyl-amino)-cyclopropan-1-carbonsäure-Derivate sind durch die Formel (Id) allgemein definiert.

Als Ausgangsstoffe für das erfindungsgemässe Verfahren (c) besonders bevorzugt sind Verbindungen der Formel (Id), in welchen X für Hydroxy, Methoxy, Ethoxy, n-und i-Propoxy, n-, i- und s-Butoxy, für n-Hexyloxy, n-Octyloxy, n-Dodecyloxy, für 2-Hydroxyethoxy, 2-Bromethoxy, 2-Chlorethoxy, 2-Aminoethoxy, 2-(Methylamino)-ethoxy, 2-(Dimethylamino)-ethoxy, 2-(Formylamino)-ethoxy, 2-(Acetylamino)-ethoxy, 2-Methoxyethoxy, 2-Ethoxyethoxy, 2-Acetoxyethoxy, für Cyclopropylmethoxy, für Cyclohexylmethoxy, für Benzyloxy, für Amino, Methylamino oder Ethylamino steht.

Die 1-(N-Formyl-methylamino)-cyclopropan-1-carbonsäure-Derivate der Formel (Id) sind bisher noch nicht bekannt. Sie lassen sich jedoch in einfacher Weise nach mehreren der oben angegebenen erfindungsgemässen Verfahren herstellen.

Die bei der Durchführung des erfindungsgemässen Verfahrens (d) als Ausgangsstoffe benötigten 1-Methylamino-cyclo-propan-1-carbonsäureester sind durch die Formel (If) allgemein definiert. In dieser Formel (If) steht $R^1$ vorzugsweise für Methyl oder Ethyl; Y besitzt vorzugsweise diejenigen Bedeutungen, die schon bei der Beschreibung der erfindungsgemässen Stoffe der Formel (I) als bevorzugt für diesen Rest genannt wurden.

Die 1-Methylamino-cyclopropan-1-carbonsäureester der Formel (If) sind bisher noch nicht bekannt. Sie lassen sich jedoch in einfacher Weise nach oben angegebenen erfindungsgemässen Verfahren herstellen.

Die bei der Durchführung des erfindungsge-

mässen Verfahrens (d, Variante α) weiterhin als Ausgangsstoffe benötigten Alkohole sind durch die Formel (IV) allgemein definiert.

Besonders bevorzugt als Ausgangsstoffe zur Durchführung des erfindungsgemässen Verfahrens (d, Variante α) sind Alkohole der Formel (IV), in welcher $R^3$ für Methyl, Ethyl, n- und i-Propyl, n-, i-, s- und t-Butyl, n-Hexyl, n-Octyl, n-Dodecyl, für 2-Hydroxyethyl, 2-Bromethyl, 2-Chlorethyl, 2-(Dimethylamino)-ethyl, 2-(Formylamino)-ethyl, 2-(Acetylamino)-ethyl, 2-Methoxyethyl, 2-Ethoxyethyl, 2-Acetoxyethyl, für Cyclopropylmethyl, für Cyclohexylmethyl oder für Benzyl steht.

Die Alkohole der Formel (IV) sind allgemein bekannte Verbindungen der organischen Chemie.

Die weiterhin zur Durchführung des erfindungsgemässen Verfahrens (d, Variante β) als Ausgangsstoffe benötigten Amine sind durch die Formel (V) allgemein definiert.

Die Amine der Formel (V) sind allgemein bekannte Verbindungen der organischen Chemie.

Die zur Durchführung des erfindungsgemässen Verfahrens (e) als Ausgangsstoffe benötigten 1-Methylamino-cyclopropan-1-carbonsäure-Derivate sind durch die Formel (Ih) allgemein definiert. In dieser Formel (Ih) besitzt X vorzugsweise diejenigen Bedeutungen, die schon bei der Beschreibung der erfindungsgemässen Stoffe der Formel (I) als bevorzugt für diesen Rest genannt wurden.

Die 1-Methylamino-cyclopropan-1-carbonsäure-Derivate der Formel (Ih) sind bisher noch nicht bekannt. Sie lassen sich jedoch in einfacher Weise nach mehreren der oben genannten erfindungsgemässen Verfahren herstellen.

Die weiterhin zur Durchführung des erfindungsgemässen Verfahrens (e) als Ausgangsstoffe benötigten Acylierungsmittel sind durch die Formel (VI) allgemein definiert. In dieser Formel (VI) steht $Y^1$ für Formyl.

A steht vorzugsweise für einen der üblicherweise verwendeten Acylgruppen-aktivierenden Reste, wie beispielsweise Halogen, insbesondere Chlor oder Brom, ferner für Aktivester-Reste, wie beispielsweise gegebenenfalls substituierte Alkoxygruppen, Anhydrid-Reste, wie beispielsweise se gegebenenfalls substituierte Acyloxygruppen oder für den N,N′-Dicyclohexylcarbodiimid-Addukt-Rest der Formel

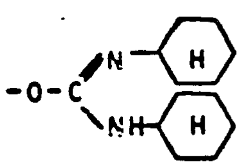

Die Acylierungsmittel der Formel (VI) sind allgemein bekannte Verbindungen der organischen Chemie.

Die zur Durchführung des erfindungsgemässen Verfahrens (f) als Ausgangsstoffe benötigten 1-Methylamino-cyclopropan-1-carbonsäuren sind durch die Formel (Ij) allgemein definiert.

Die 1-Methylamino-cyclopropan-1-carbonsäuren der Formel (Ij) sind bisher noch nicht bekannt. Sie lassen sich jedoch in einfacher Weise nach mehreren der oben angegebenen erfindungsgemässen Verfahren herstellen.

Die bei der Durchführung des erfindungsgemässen Verfahrens (f, Variante α) weiterhin als Ausgangsstoffe benötigten Alkohole der Formel (IV) wurden bereits im Zusammenhang mit der Beschreibung des erfindungsgemässen Verfahrens (d, Variante α) im einzelnen abgehandelt.

Die bei der Durchführung des erfindungsgemässen Verfahrens (f, Variante β) weiterhin als Ausgangsstoffe benötigten Amine der Formel (V) wurden bereits im Zusammenhang mit der Beschreibung des erfindungsgemässen Verfahrens (d, Variante β) im einzelnen abgehandelt.

Die zur Durchführung des erfindungsgemässen Verfahrens (g) als Ausgangsstoffe benötigten 1-Methylamino-cyclopropan-1-carbonsäuresalze sind durch die Formel (Ij) allgemein definiert.

Die 1-Methylamino-cyclopropan-1-carbonsäuren der Formel (Ij) sind bisher noch nicht bekannt. Sie lassen sich jedoch in einfacher Weise aus den entsprechenden Säuren herstellen.

Die weiterhin zur Durchführung des erfindungsgemässen Verfahrens (g) als Ausgangsstoffe benötigten Verbindungen sind durch die Formel (VIII) allgemein definiert. In dieser Formel (VIII) besitzt $R^3$ vorzugsweise diejenigen Bedeutungen, die schon bei der Beschreibung der Alkohole der Formel (IV) als bevorzugt für diesen Rest genannt wurden. Z besitzt vorzugsweise diejenigen Bedeutungen, die schon bei der Beschreibung der Methylierungsmittel der Formel (III) als bevorzugt für diesen Rest genannt wurden.

Die Verbindungen der Formel (VIII) sind allgemein bekannte Verbindungen der organischen Chemie.

Für das erfindungsgemässe Verfahren (a) kommen als Verdünnungsmittel inerte organische Lösungsmittel in Frage. Hierzu gehören vorzugsweise aliphatische oder aromatische Kohlenwasserstoffe, wie beispielsweise Benzin, Benzol, Toluol, Xylol, Pentan, Hexan, Ester, wie Essigsäureethylester, Ether, wie Tetrahydrofuran, Dioxan oder Dimethoxyethan, oder dipolar aprotische Lösungsmittel, wie Acetonitril, Propionitril, Dimethylformamid, Dimethylsulfoxid oder Hexamethylphosphorsäuretriamid.

Als Säurebindemittel kommen für das erfindungsgemässe Verfahren (a) alle üblichen organischen und insbesondere anorganischen Basen in Frage. Besonders bevorzugt verwendet man Alkalimetallhydroxide, -hydride oder -carbonate, wie beispielsweise Natriumhydrid, Natrium- oder Kaliumhydroxid bzw. Natrium- oder Kaliumcarbonat.

Die Reaktionstemperaturen können bei der Durchführung des erfindungsgemässen Verfahrens (a) in einem grösseren Bereich variiert werden. Im allgemeinen arbeitet man zwischen 0°C und 150°C, vorzugsweise zwischen 20°C und 120°C.

Bei der Durchführung des erfindunsgemässen Verfahrens (a) setzt man pro Mol 1-Acylamino-cyclopropan-1-carbonsäureester der Formel (II)

im allgemeinen 1 bis 10 Mol, vorzugsweise 1 bis 5 Mol an Methylierungsmittel der Formel (III) ein. In einer besonderen Ausführungsform lässt sich die Herstellung der Ausgangsverbindungen der Formel (II) gemäss EP-A 0 025 141 und die anschliessende Umsetzung nach dem erfindungsgemässen Verfahren (a) in einer «Eintopfreaktion» ohne Isolierung der Zwischenstufen der Formel (II) durchführen (vgl. Herstellungsbeispiele). Die Aufarbeitung und Isolierung der erfindungsgemässen Stoffe der Formel (Ia) erfolgt nach allgemein üblichen Methoden.

Als Verdünnungsmittel zur Durchführung des erfindungsgemässen Verfahrens (b) kommen wässrige oder mit Wasser mischbare organische Lösungsmittel in Betracht. Vorzugsweise verwendet man einen Überschuss an konzentrierter wässriger Salzsäure als Verdünnungsmittel.

Die Reaktionstemperaturen können bei dem erfindungsgemässen Verfahren (b) in einem grösseren Bereich variiert werden. Im allgemeinen arbeitet man zwischen 50°C und 120°C, vorzugsweise bei Rückflusstemperatur.

Zur Durchführung des erfindungsgemässen Verfahrens (b) setzt man pro Mol 1-(N-Acyl-methylamino)-cyclopropan-1-carbonsäureester der Formel (Ia) 1 bis 30 Mol konzentrierte wässrige Salzsäure ein und erhitzt den Reaktionsansatz für mehrere Stunden unter Rückfluss. Zur Aufarbeitung dampft man die Reaktionsmischung im Vakuum ein und entfernt so die flüchtigen Reaktionsnebenprodukte. Die 1-(N-Methylamino)-cyclopropancarbonsäure bleibt in Form ihres Hydrochlorides als kristalliner Feststoff zurück, der sich nach üblichen Verfahren (beispielsweise mit Propylenoxid) in die freie Säure überführen lässt (vgl. z.B. EP-A 0 025 141).

Für das erfindungsgemässe Verfahren (c) kommen als Verdünnungsmittel Wasser oder mit Wasser mischbare organische Verdünnungsmittel in Frage. Vorzugsweise verwendet man Mischungen aus wässriger Salzsäure mit geeigneten organischen Verdünnungsmitteln, wie beispielsweise Methanol, Ethanol, Tetrahydrofuran, Dioxan oder Acetonitril.

Die Reaktionstemperaturen können bei dem erfindungsgemässen Verfahren (c) in einem grösseren Bereich variiert werden. Im allgemeinen arbeitet man zwischen −20°C und +50°C, vorzugsweise bei Raumtemperatur.

Zur Durchführung des erfindungsgemässen Verfahrens (c) setzt man pro Mol 1-(N-Formylmethylamino)-cyclopropan-1-carbonsäure-Derivat der Formel (Id) im allgemeinen 1 bis 2 Mol, vorzugsweise eine äquimolare Menge an wässriger Salzsäure ein und rührt den Reaktionsansatz für mehrere Stunden bei der jeweils erforderlichen Temperatur.

Zur Aufarbeitung engt man die Reaktionsmischung im Vakuum ein und entfernt so das Verdünnungsmittel und sonstige flüchtige Anteile. Die 1-Methylamino-cyclopropan-1-carbonsäure-Derivate bleiben als Hydrochloride in fester Form zurück und lassen sich nach üblichen Methoden (beispielsweise mit Propylenoxid) in die salzfreien Stoffe überführen (vgl. z.B. EP-A 0 025 141).

Für das erfindungsgemässe Verfahren (d, Variante α) kommen als Verdünnungsmittel inerte organische Lösungsmittel in Frage. Vorzugsweise verwendet man Ether, wie beispielsweise Dioxan oder Tetrahydrofuran. Es ist jedoch auch möglich, den als Reaktionspartner eingesetzten Alkohol der Formel (IV) in entsprechendem Überschuss als Verdünnungsmittel zu verwenden.

Als Katalysatoren für das erfindungsgemässe Verfahren (d, Variante α) kommen insbesondere saure Katalysatoren in Frage. Besonders vorteilhaft verwendet man Lewis-Säuren, wie beispielsweise Bortrifluorid oder Titantetraalkylate, wie beispielsweise Titan-tetraethylat oder Titan-tetraisopropylat. Es ist auch möglich, anorganische Zeolithe zu verwenden, die den freiwerdenden niedermolekularen Alkohol binden und somit aus dem Reaktionsgleichgewicht entfernen.

Die Reaktionstemperaturen können bei dem erfindungsgemässen Verfahren (d, Variante α) in einem grösseren Bereich variiert werden. Im allgemeinen arbeitet man zwischen 0°C und 120°C, vorzugsweise zwischen 30°C und 100°C.

Zur Durchführung des erfindungsgemässen Verfahrens (d, Variante α) setzt man pro Mol 1-Methylamino-cyclopropan-1-carbonsäureester der Formel (If) 1 bis 30 Mol Alkohol der Formel (IV) und 0,1 bis 2 Mol an Katalysator ein. Die Aufarbeitung und Isolierung der Reaktionsprodukte erfolgt nach allgemein üblichen Methoden.

Für das erfindungsgemässe Verfahren (d, Variante β) kommen als Verdünnungsmittel ebenfalls inerte organische Lösungsmittel in Frage. Vorzugsweise verwendet man protische Lösungsmittel, insbesondere Alkohole, wie Methanol, Ethanol oder Isopropanol.

Die Reaktionstemperaturen können bei dem erfindunsgemässen Verfahren (d, Variante β) in einem grösseren Bereich variiert werden. Im allgemeinen arbeitet man zwischen −10°C und +120°C, vorzugsweise zwischen +10°C und +80°C.

Zur Durchführung des erfindungsgemässen Verfahrens (d, Variante β) setzt man pro Mol 1-Methylaminocyclopropan-1-carbonsäureester der Formel (If) 1 bis 10 Mol an Amin der Formel (V) ein. Die Aufarbeitung und Isolierung der Reaktionsprodukte erfolgt nach allgemein üblichen Methoden.

Für das erfindungsgemässe Verfahren (e) kommen als Verdünnungsmittel insbesondere inerte organische Lösungsmittel in Frage. Vorzugsweise verwendet man aliphatische oder aromatische, gegebenenfalls halogenierte Kohlenwasserstoffe, wie Benzin, Benzol, Toluol, Xylol, Pentan, Hexan, Heptan, Cyclohexan, Petrolether, Ligroin, Methylenchlorid, Ethylenchlorid, Chloroform, Tetrachlorkohlenstoff, Chlorbenzol oder Dichlorbenzol, Ether, wie Diethylether oder Diisopropylether, Ethylenglykol-dimethylether, Tetra-hydrofuran oder Dioxan, Ketone, wie Aceton oder Butanon, Methylisopropylketon oder Methylisobutylketon, Ester, wie Essigsäureethylester,

Nitrile, wie Acetonitril oder Propionitril, Amide, wie Dimethylformamid, Dimethylacetamid, N-Methylpyrrolidon oder Hexamethylphosphorsäuretriamid.

Verwendet man Acylierungsmittel der Formel (VI) in flüssiger Form, so ist es auch möglich, diese in entsprechendem Überschuss als Verdünnungsmittel einzusetzen.

Als Säurebindemittel kommen für das erfindungsgemässe Verfahren (e) alle üblicherweise verwendbaren anorganischen und organischen Basen in Frage. Vorzugsweise verwendet man Alkalimetallhydroxide oder -carbonate, wie beispielsweise Natriumhydroxid, Kaliumhydroxid, Natriumcarbonat oder Kaliumcarbonat oder auch tertiäre Amine, wie beispielsweise Triethylamin, N,N-Dimethylanilin, Pyridin, 4-(N-N-Dimethylamino)-pyridin, Diazabicyclooctan (DABCO), Diazabicyclononen (DBN) oder Diazabicycloundecen (DBU).

Die Reaktionstemperaturen können bei dem erfindungsgemässen Verfahren (e) in einem grösseren Bereich variiert werden. Im allgemeinen arbeitet man zwischen −20°C und +150°C, vorzugsweise zwischen 0°C und +100°C.

Zur Durchführung des erfindungsgemässen Verfahrens (e) setzt man pro Mol 1-Methylamino-cyclopropan-1-carbonsäure-Derivat der Formel (Ih) im allgemeinen 1 bis 30 Mol, vorzugsweise 1 bis 10 Mol an Acylierungsmittel der Formel (VI) und 1 bis 3 Mol, vorzugsweise 1 bis 2 Mol an Säurebindemittel ein. Die Aufarbeitung und Isolierung der Reaktionsprodukte erfolgt nach allgemein üblichen Verfahren.

Für das erfindungsgemässe Verfahren (f, Variante α) kommen als Verdünnungsmittel ebenfalls inerte organische Lösungsmittel in Frage. Vorzugsweise verwendet man die bei Verfahren (e) genannten Lösungsmittel. Es ist jedoch auch möglich, den als Reaktionspartner verwendeten Alkohol der Formel (IV) in entsprechendem Überschuss als Verdünnungsmittel einzusetzen.

Als Säurebindemittel können bei dem erfindungsgemässen Verfahren (f, Variante α) alle üblichen Säureakzeptoren Verwendung finden. Vorzugsweise verwendet man tertiäre aliphatische, aromatische und heterocyclische Amine, wie beispielsweise Triethylamin, N,N-Dimethylanilin, N,N-Dimethylbenzylamin, Pyridin, 4-Dimethylaminopyridin, Diazabicycloctan (DABCO), Diazabicyclononen (DBN) oder Diazabicycloundecen (DBU).

Als Aktivierungsmittel oder Katalysatoren für das erfindungsgemässe Verfahren (f, Variante α), lassen sich alle üblicherweise bei Veresterungen verwendeten Aktivierungsmittel oder Katalysatoren einsetzen. Hierzu gehören Protonensäuren, wie beispielsweise Schwefelsäure oder p-Toluolsulfonsäure, Lewis-Säuren, wie beispielsweise Bortrifluorid, Kondensationsmittel, wie beispielsweise N,N′-Dicyclohexylcarbodiimid (DCC) oder 2-Ethoxy-N-ethoxycarbonyl-1,2-dihydrochinolin (EEDQ), Säurehalogenidbildner, wie beispielsweise Phosphorpentachlorid, Phosphortribromid oder Thionylchlorid oder Anhydridbildner, wie beispielsweise Chlorameisensäureethylester oder Chlorameisensäure-4-nitrophenylester.

Die Reaktionstemperaturen können bei dem erfindungsgemässen Verfahren (f, Variante α) in einem grösseren Bereich variiert werden. Im allgemeinen arbeitet man zwischen −20°C und +150°C, vorzugsweise zwischen 0°C und +120°C.

Zur Durchführung des erfindungsgemässen Verfahrens (f, Variante α), setzt man pro Mol 1-Methylamino-cyclopropan-1-carbonsäure der Formel (I) im allgemeinen 1 bis 30 Mol, vorzugsweise 1 bis 10 Mol Alkohol der Formel (IV), 0,1 bis 2 Mol an Aktivierungsmittel oder Katalysator und 1 bis 2 Mol an Säurebindemittel ein. Die Aufarbeitung und Isolierung der Reaktionsprodukte erfolgt nach allgemein üblichen Verfahren. In einer besonderen Ausführungsform ist es auch möglich, aus der 1-Methylamino-cyclopropan-1-carbonsäure der Formel (Ij) und dem Aktivierungsmittel zunächst in einer vorgelagerten Reaktion, gegebenenfalls in Gegenwart des Säurebindemittels, einen aktivierten Komplex aus Säure und Aktivierungsmittel herzustellen und zu isolieren und diesen in einer 2. Stufe in getrennter Reaktion mit dem Alkohol der Formel (IV), gegebenenfalls in Gegenwart des Säurebindemittels umzusetzen.

Auch in diesem Fall erfolgt die Durchführung, Aufarbeitung und Isolierung der jeweiligen Endprodukte nach allgemein üblichen Verfahren (vgl. z.B. E.K. Euranto in S. Patai «The Chemistry of Carboxylic Acids and Esters», Interscience Publishers, London 1969, S. 505 ff).

Für das erfindungsgemässe Verfahren (f, Variante β) kommen als Verdünnungsmittel ebenfalls inerte organische Lösungsmittel in Frage. Vorzugsweise verwendet man die bei Verfahren (e) genannten Lösungsmittel.

Als Säurebindemittel kommen bei dem erfindungsgemässen Verfahren (f, Variante β) ebenfalls alle üblichen Säurebindemittel in Frage. Vorzugsweise verwendet man die bei den Verfahren (e) und (f, Variante α) aufgezählten anorganischen Basen und tertiären Amine. Es ist jedoch auch möglich, einen entsprechenden Überschuss des als Reaktionspartner eingesetzten Amins der Formel (VI) als Säurebindemittel zu verwenden.

Als Aktivierungsmittel für das erfindungsgemässe Verfahren (f, Variante β) lassen sich alle üblicherweise bei Amidierungsreaktionen verwendeten Aktivierungsmittel einsetzen. Beispielhaft genannt seien Säurehalogenidbildner wie Phosphortribromid, Phosphorpentachlorid, Phosphoroxychlorid oder Thionylchlorid, Anhydridbildner, wie Chlorameisensäureethylester sowie Kondensationsmittel, wie N,N′-Dicyclohexylcarbodiimid (DCC), 2-Ethoxy-N-ethoxycarbonyl-1,2-dihydrochinolin (EEDQ) oder Triphenylphosphin/Tetrachlorkohlenstoff.

Die Reaktionstemperaturen können bei dem erfindungsgemässen Verfahren (f, Variante β) in einem grösseren Bereich variiert werden. Im allgemeinen arbeitet man zwischen −20°C und +220°C, vorzugsweise zwischen 0°C und +150°C.

Zur Durchführung des erfindungsgemässen Verfahrens (f, Variante β) setzt man pro Mol 1-Methylamino-cyclopropan-1-carbonsäure der Formel (Ij) im allgemeinen 1 bis 5 Mol, vorzugsweise 1 bis 3 Mol an Amin der Formel (V) sowie 1 bis 2 Mol an Säurebindemittel und 1 bis 2 Mol an Aktivierungsmittel ein. Die Aufarbeitung und Isolierung der Reaktionsprodukte erfolgt nach allgemein üblichen Verfahren. Wie bei der Durchführung des erfindungsgemässen Verfahrens (f, Variante α) so ist es auch hierbei in einer besonderen Ausführungsform möglich, aus der 1-Methylamino-cyclopropan-1-carbonsäure der Formel (Ij) und dem Aktivierungsmittel zunächst in einer vorgelagerten Reaktion, gegebenenfalls in Gegenwart des Säurebindemittels, einen aktivierten Komplex aus Säure und Aktivierungsmittel herzustellen und zu isolieren und diesen in einer 2. Stufe in getrennter Reaktion mit dem Amin der Formel (V), gegebenenfalls in Gegenwart des Säurebindemittels, umzusetzen. Auch in diesem Fall erfolgt die Durchführung, Aufarbeitung und Isolierung der jeweiligen Endprodukte nach allgemein üblichen Verfahren.

Als Verdünnungsmittel zur Durchführung des erfindungsgemässen Verfahrens (g) kommen ebenfalls organische Lösungsmittel in Frage. Vorzugsweise verwendet man die bei Verfahren (a) aufgeführten Kohlenwasserstoffe oder dipolar aprotische Lösungsmittel.

Die Reaktionstemperaturen können bei der Durchführung des erfindungsgemässen Verfahrens (g) ebenfalls in einem grösseren Bereich variiert werden. Im allgemeinen arbeitet man zwischen 20°C und 180°C, vorzugsweise zwischen 50°C und 120°C.

Zur Durchführung des erfindungsgemässen Verfahrens (g) setzt man pro Mol 1-Methylamino-cyclopropan-1-carbonsäuresalz der Formel (I1) im allgemeinen 1 bis 10 Mol, vorzugsweise 1 bis 3 Mol an Alkylierungsmittel der Formel (VIII) ein. Die Aufarbeitung und Isolierung der Reaktionsprodukte erfolgt nach allgemein üblichen Methoden.

Zur Herstellung von pflanzenverträglichen Säureadditionssalzen der Verbindungen der allgemeinen Formel (I) kommen vorzugsweise folgende Säuren in Frage: Halogenwasserstoffsäuren, wie z.B. Chlorwasserstoffsäure und Bromwasserstoffsäure, insbesondere Chlorwasserstoffsäure, ferner Phosphorsäure, Salpetersäure, Schwefelsäure, mono- und bifunktionelle Carbonsäuren und Hydroxycarbonsäuren, wie z.B. Essigsäure, Maleinsäure, Bernsteinsäure, Fumarsäure, sowie Sulfonsäuren, wie z.B. p-Toluolsulfonsäure und 1,5-Naphthalin-disulfonsäure.

Die Säureadditionssalze der Verbindungen der allgemeinen Formel (I) können in einfacher Weise nach üblichen Salzbildungsmethoden, z.B. durch Lösen einer Verbindung der allgemeinen Formel (I) in einem geeigneten organischen Lösungsmittel und Hinzufügen der Säure, z.B. Chlorwasserstoffsäure, erhalten werden und in bekannter Weise z.B. durch Abfiltrieren, isoliert und gegebenenfalls durch Waschen mit einem inerten organischen Lösungsmittel gereinigt werden.

Die erfindungsgemässen Wirkstoffe greifen in den Metabolismus der Pflanzen ein und können deshalb als Wachstumsregulatoren eingesetzt werden.

Für die Wirkungsweise von Pflanzenwachstumsregulatoren gilt nach der bisherigen Erfahrung, dass ein Wirkstoff auch mehrere verschiedenartige Wirkungen auf Pflanzen ausüben kann. Die Wirkungen der Stoffe hängen im wesentlichen ab von dem Zeitpunkt der Anwendung bezogen auf das Entwicklungsstadium der Pflanze sowie von den auf die Pflanzen oder ihre Umgebung ausgebrachten Wirkstoffmengen und von der Art der Applikation. In jedem Fall sollen Wachstumsregulatoren die Kulturpflanzen in bestimmter gewünschter Weise beeinflussen.

Pflanzenwuchsregulierende Stoffe können zum Beispiel zur Hemmung des vegetativen Wachstums der Pflanzen eingesetzt werden. Eine derartige Wuchshemmung ist unter anderem bei Gräsern von wirtschaftlichem Interesse, denn dadurch kann die Häufigkeit der Grasschnitte in Ziergärten, Park- und Sportanlagen, an Strassenrändern, auf Flughäfen oder in Obstanlagen reduziert werden. Von Bedeutung ist auch die Hemmung des Wuchses von krautigen und holzigen Pflanzen an Strassenrändern und in der Nähe von Pipelines oder Überlandleitungen oder ganz allgemein in Bereichen, in denen ein starker Zuwachs der Pflanzen unerwünscht ist.

Wichtig ist auch die Anwendung von Wachstumsregulatoren zur Hemmung des Längenwachstums von Getreide. Hierdurch wird die Gefahr des Umknickens («Lagerns») der Pflanzen vor der Ernte verringert oder vollkommen beseitigt. Ausserdem können Wachstumsregulatoren bei Getreide eine Halmverstärkung hervorrufen, die ebenfalls dem Lagern entgegenwirkt. Die Anwendung von Wachstumsregulatoren zur Halmverkürzung und Halmverstärkung erlaubt es, höhere Düngermengen auszubringen, um den Ertrag zu steigern, ohne dass die Gefahr besteht, dass das Getreide lagert.

Eine Hemmung des vegetativen Wachstums ermöglicht bei vielen Kulturpflanzen eine dichtere Anpflanzung, so dass Mehrerträge bezogen auf die Bodenfläche erzielt werden können. Ein Vorteil der so erzielten kleineren Pflanzen ist auch, dass die Kultur leichter bearbeitet und beerntet werden kann.

Eine Hemmung des vegetativen Wachstums der Pflanzen kann auch dadurch zu Ertragssteigerungen führen, dass die Nährstoffe und Assimilate in stärkerem Masse der Blüten- und Fruchtbildung zugute kommen als den vegetativen Pflanzenteilen.

Mit Wachstumsregulatoren lässt sich häufig auch eine Förderung des vegetativen Wachstums erzielen. Dies ist von grossem Nutzen, wenn die vegetativen Pflanzenteile geerntet werden. Eine Förderung des vegetativen Wachstums kann aber auch gleichzeitig zu einer Förderung des generativen Wachstums führen, dadurch

dass mehr Assimilate gebildet werden, so dass mehr oder grössere Früchte entstehen.

Ertragssteigerungen können in manchen Fällen durch einen Eingriff in den pflanzlichen Stoffwechsel erreicht werden, ohne dass sich Änderungen des vegetativen Wachstums bemerkbar machen. Ferner kann mit Wachstumsregulatoren eine Veränderung der Zusammensetzung der Pflanzen erreicht werden, was wiederum zu einer Qualitätsverbesserung der Ernteprodukte führen kann. So ist es beispielsweise möglich, den Gehalt an Zucker in Zuckerrüben, Zuckerrohr, Ananas sowie in Zitrusfrüchten zu erhöhen oder den Proteingehalt in Soja oder Getreide zu steigern. Auch ist es beispielsweise möglich, den Abbau erwünschter Inhaltsstoffe, wie z.B. Zucker in Zukkerrüben oder Zuckerrohr, mit Wachstumsregulatoren vor oder nach der Ernte zu hemmen. Ausserdem lässt sich die Produktion oder der Abfluss von sekundären Pflanzeninhaltsstoffe positiv beeinflussen. Als Beispiel sei die Stimulierung des Latexflusses bei Gummibäumen genannt.

Unter dem Einfluss von Wachstumsregulatoren kann es zur Ausbildung parthenokarper Früchte kommen. Ferner kann das Geschlecht der Blüten beeinflusst werden. Auch kann eine Sterilität des Pollens erzeugt werden, was bei der Züchtung und Herstellung von Hybridsaatgut eine grosse Bedeutung hat.

Durch den Einsatz von Wachstumsregulatoren lässt sich die Verzweigung der Pflanzen steuern. Einerseits kann durch Brechen der Apikaldominanz die Entwicklung von Seitentrieben gefördert werden, was besonders im Zierpflanzenbau auch in Verbindung mit einer Wuchshemmung sehr erwünscht sein kann. Andererseits ist es aber auch möglich, das Wachstum der Seitentriebe zu hemmen. Für diese Wirkung besteht z.B. grosses Interesse im Tabakanbau oder bei der Anpflanzung von Tomaten.

Unter dem Einfluss von Wachstumsregulatoren kann der Blattbestand der Pflanzen so gesteuert werden, dass ein Entblättern der Pflanzen zu einem gewünschten Zeitpunkt erreicht wird. Eine derartige Entlaubung spielt bei der mechanischen Beerntung der Baumwolle eine grosse Rolle ist aber auch in anderen Kulturen wie z.B. im Weinbau zur Erleichterung der Ernte von Interesse. Eine Entlaubung der Pflanzen kann auch vorgenommen werden, um die Transpiration der Pflanzen vor dem Verpflanzen herabzusetzen.

Ebenso lässt sich mit Wachstumsregulatoren der Fruchtfall steuern. Einerseits kann ein vorzeitiger Fruchtfall verhindert werden. Andererseits kann aber auch der Fruchtfall oder sogar das Abfallen der Blüten bis zu einem gewünschten Masse gefördert werden («Ausdünnung»), um die Alternanz zu brechen. Unter Alternanz versteht man die Eigenart einiger Obstarten, endogen bedingt von Jahr zu Jahr sehr unterschiedliche Erträge zu bringen. Schliesslich ist es möglich, mit Wachstumsregulatoren zum Zeitpunkt der Ernte die zum Ablösen der Früchte erforderlichen Kräfte zu reduzieren, um eine mechanische Beerntung zu ermöglichen oder eine manuelle Beerntung zu erleichtern.

Mit Wachstumsregulatoren lässt sich ferner eine Beschleunigung oder auch Verzögerung der Reife des Erntegutes vor oder nach der Ernte erreichen. Dieses ist von besonderem Vorteil, weil sich dadurch eine optimale Anpassung an die Bedürfnisse des Marktes herbeiführen lässt. Weiterhin können Wachstumsregulatoren in manchen Fällen die Fruchtausfärbung verbessern. Darüber hinaus kann mit Wachstumsregulatoren auch eine zeitliche Konzentrierung der Reife erzielt werden. Damit werden die Voraussetzungen dafür geschaffen, dass z.B. bei Tabak, Tomaten oder Kaffee ein vollständige mechanische oder manuelle Beerntung in einem Arbeitsgang vorgenommen werden kann.

Durch Anwendung von Wachstumsregulatoren kann ferner die Samen- oder Knospenruhe der Pflanzen beeinflusst werden, so dass die Pflanzen, wie z.B. Ananas oder Zierpflanzen in Gärtnereien, zu einem Zeitpunkt keimen, austreiben oder blühen, an dem sie normalerweise hierzu keine Bereitschaft zeigen. Eine Verzögerung des Austriebes von Knospen oder der Keimung von Samen mit Hilfe von Wachstumsregulatoren kann in frostgefährdeten Gebieten erwünscht sein, um Schädigungen durch Spätfröste zu vermeiden.

Schliesslich kann mit Wachstumsregulatoren eine Resistenz der Pflanzen gegen Frost, Trokkenheit oder hohen Salzgehalt des Bodens induziert werden. Hierdurch wird die Kultivierung von Pflanzen in Gebieten möglich, die hierzu normalerweise ungeeignet sind.

Die Wirkstoffe können in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphtaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder

Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweisshydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline, und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die erfindungsgemässen Wirkstoffe können in den Formulierungen in Mischung mit anderen bekannten Wirkstoffen vorliegen, wie Fungizide, Insektizide, Akarizide und Herbizide, sowie in Mischungen mit Düngemitteln und anderen Wachstumsregulatoren.

Die Wirkstoffe können also solche, in Form ihrer Formulierungen oder den daraus bereiteten Anwendungsformen, wie gebrauchsfertige Lösungen, emulgierbare Konzentrate, Emulsionen, Schäume, Suspensionen, Spritzpulver, Pasten, lösliche Pulver, Stäubemittel und Granulate, angewendet werden. Die Anwendung geschieht in üblicher Weise, z.B. durch Giessen, Verspritzen, Versprühen, Verstreuen, Verstäuben, Verschäumen, Bestreichen usw. Es ist ferner möglich, die Wirkstoffe nach dem Ultra-Low-Volume-Verfahren auszubringen oder die Wirkstoffzubereitung oder den Wirkstoff selbst in den Boden zu injizieren. Es kann auch das Saatgut der Pflanzen behandelt werden.

Die Aufwandmengen können in einem grösseren Bereich variiert werden. Im allgemeinen verwendet man pro Hektar Bodenfläche 0,01 bis 50 kg, bevorzugt 0,05 bis 10 kg an Wirkstoff.

Für die Anwendungszeit gilt, dass die Anwendung der Wachstumsregulatoren in einem bevorzugten Zeitraum vorgenommen wird, dessen genaue Abgrenzung sich nach den klimatischen und vegetativen Gegebenheiten richtet.

Die Herstellung und die Verwendung der erfindungsgemässen Wirkstoffe geht aus den folgenden Beispielen hervor.

Herstellungsbeispiele
Beispiel 1

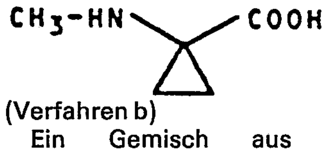

(Verfahren b)

Ein Gemisch aus 2,5 g (0,0146 Mol) 1-(N-Acetyl-methyl-amino)-cyclopropan-1-carbonsäuremethylester und 15 ml konzentrierter Salzsäure wurde 5 Stunden unter Rückfluss erhitzt. Die Reaktionslösung wurde im Vakuum eingedampft, der Rückstand in 2,9 ml Methanol gelöst und bei 10°C bis 20°C tropfenweise unter Rühren mit 1,7 g (0,0292 Mol) Propylenoxid versetzt. Man rührte eine Stunde bei 20°C nach und bewahrte dann das Reaktionsgemisch für 15 Stunden bei 0°C auf. Der ausgefallene Niederschlag wurde abgesaugt und bei 40°C getrocknet.

Man erhielt so 1,2 g (71,4% der Theorie) an 1-Methylamino-cyclopropan-1-carbonsäure vom Schmelzpunkt 237°C bis 238°C (Zersetzung).

Herstellung des Ausgangsproduktes

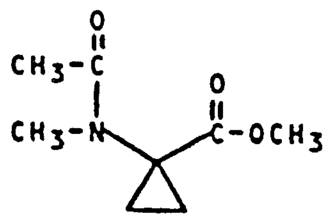

In eine Schmelze von 17,3 g (0,1 Mol) N-Acetylmethioninmethylester tropfte man bei 110°C innerhalb von 20 Minuten 13,9 g (0,11 Mol) Dimethylsulfat und rührte weitere 3 Stunden bei 110°C.

Das erhaltene Reaktionsgemisch wurde in 70 ml Dimethylformamid gelöst, und nach Zugabe von 55,3 g (0,4 Mol) Kaliumcarbonat tropfte man bei 100°C 21,3 g (0,15 Mol) Methyljodid zu. Man rührte weitere 3 Stunden bei 100°C, verdünnte nach Abkühlung mit Methylenchlorid, filtrierte über Kieselgur, dampfte im Vakuum ein, löste den Rückstand in Acetonitril, behandelte mit Aktivkohle, filtrierte und entfernte das Lösungsmittel im Vakuum.

Man erhielt so 19,2 g (100% der Theorie) an 1-(N-Acetyl-methylamino)-cyclopropan-1-carbonsäuremethylester, der ohne Reinigung weiterverwendet wurde.

Beispiel 2

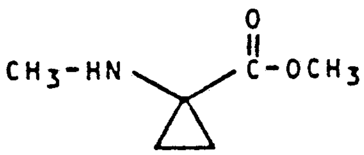

x HCl

(Verfahren f, Variante α)

In 300 ml Methanol wurden bei −10°C 86,5 g (1,2 Mol) Thionylchlorid getropft und anschliessend portionsweise 36,9 g (0,32 Mol) 1-Methylamino-cyclopropan-1-carbonsäure eingetragen. Man rührte 5 Stunden bei Raumtemperatur und liess die Mischung über Nacht stehen. Zur Aufarbeitung filtrierte man, dampfte das Filtrat im Vakuum ein und erhitzte den Rückstand zusammen mit 7 g Aktivkohle 10 Minuten lang in Methanol. Nach dem Filtrieren und Eindampfen erhielt man 45,9 g (86,6% der Theorie) an 1-Methylamino-cyclopropan-1-carbonsäuremethylester-Hydrochlorid als gelbliches zähes Öl vom Brechungsindex $n_D^{23,5}$:1,4798.

Beispiel 3

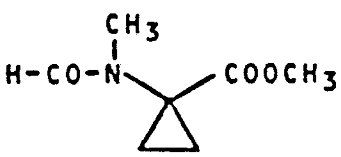

(Verfahren e)

Ein Gemisch aus 3 g (0,018 Mol) 1-Methylamino-cyclopropan-1-carbonsäuremethylester-Hydrochlorid und 36 ml Ameisensäureethylester wurde unter Rückfluss tropfenweise mit 2,5 g (0,024 Mol) Triethylamin versetzt. Nach beendeter Zugabe kochte man weitere 50 Stunden unter Rückfluss, saugte nach dem Abkühlen das ausgefallene Produkt ab und entfernte die flüchtigen Bestandteile im Vakuum.

Man erhielt so 2,8 g (99% der Theorie) an 1-(N-Formylmethylamino)-cyclopropan-1-carbonsäuremethylester als Öl.

IR ($CHCl_3$): $\nu_{co}$ = 1679 und 1733 $cm^{-1}$.

Beispiel 4

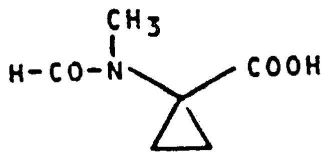

Eine Lösung von 36,2 g (0,23 Mol) 1-(N-Formyl-methyl-amino)-cyclopropan-1-carbonsäuremethylester in 230 ml Methanol wurde während 2 Stunden bei Raumtemperatur und anschliessend 2 Stunden bei 70°C mit 2 molarer wässriger Natronlauge gegen Phenolphthalein als Indikator titriert. Nach beendeter Reaktion wurde die abgekühlte Lösung durch Zugabe eines stark sauren Ionenaustauschers (Lewatit S 100, H⊕ -Form) auf pH 4 gebracht, anschliessend filtriert und im Vakuum eingedampft. Der kristalline Rückstand wurde mit Ethanol verrührt, abgesaugt, und getrocknet.

Man erhielt so 21,2 g (64,4% der Theorie) an 1-(N-Formyl-methylamino)-cyclopropan-1-carbonsäure vom Schmelzpunkt 210°C.

Nach den zuvor beschriebenen Methoden wurden auch die in der folgenden Tabelle formelmässig aufgeführten Stoffe der Formel (I) hergestellt.

Tabelle 2

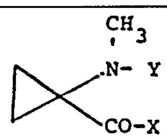

(I)

| Beispiel Nr. | Y | X | Physikalische Konstante |
|---|---|---|---|
| 5 | CHO | $-O-C_6H_{13}-n$ | Kp. 110–115°C/0,07 mbar |
| 6 | CHO | $-O-C_8H_{17}-n$ | Kp. 110–115°C/0,2 mbar |
| 7 | CHO | $-OC_3H_7-n$ | Öl |
| 8 | CHO | $-OC_4-H_9-n$ | Öl |
| 9 | CHO | $-OC_4H_9-iso$ | Öl |
| 10 | CHO | $-OC_5H_{11}-n$ | Öl |
| 11 | CHO | $-OC_{10}H_{21}$ | Kp. 110–120°C/0,02 mbar |
| 12 | CHO | $-O-CH_2-C(CH_3)_3$ | |
| 13 | CHO | $-O-CH_2-CH(C_2H_5)_2$ | Kp. 102–105°C/0,05 mbar |
| 14 | CHO | $-NH-CH_3$ | Fp. 125–128°C |
| 15 | CHO | $-O-CH_2-CH_2-CH(CH_3)_2$ | Kp. 80–90°C/0,4 mbar |
| 16 | CHO | $-O-C_2H_4-$ 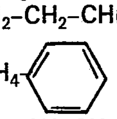 | Kp. 80–100°C/0,03 mbar |
| 17 | CHO | $-O-CH_2-CH(C_2H_5)-CH_2-CH_2-CH_2-CH_3$ | Kp. 90–100°C/0,1 mbar |
| 18 | CHO | $-O-C_2H_4-OCH_3$ | Kp. 80–86°C/0,1 mbar |

Anwendungsbeispiele

In den folgenden Anwendungsbeispielen wurde die nachstehend aufgeführte Verbindung als Vergleichssubstanz eingesetzt:

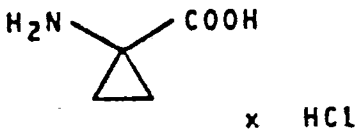

(A)

1-Amino-cyclopropan-1-carbonsäure Hydrochlorid (bekannt aus EP-A 0 005 782).

Beispiel A

Wuchshemmung bei Sommergerste

Lösungsmittel: 30 Gewichtsteile Dimethylformamid

Emulgator: 1 Gewichtsteil Polyoxyethylen-sorbitan-Monolaurat

Zur Herstellung einer zweckmässigen Wirkstoffzubereitung vermischt man 1 Gewichtsteil Wirkstoff mit der angegebenen Menge Lösungsmittel und Emulgator und füllt mit Wasser auf die gewünschte Konzentration auf.

Sommergerstepflanzen werden im Gewächshaus bis zum Erscheinen des letzten Blattes angezogen. In diesem Stadium werden die Pflanzen tropfnass mit den Wirkstoffzubereitungen besprüht. Nach 3 Wochen wird bei allen Pflanzen der Zuwachs gemessen und die Wuchshemmung in Prozent des Zuwachses der Kontrollpflanzen berechnet. Es bedeuten 100% Wuchshemmung den Stillstand des Wachstums und 0% ein Wachstum entsprechend dem der Kontrollpflanzen.

In diesem Test zeigt die Verbindung gemäss Beispiel (1) eine deutliche bessere Wirksamkeit als die Vergleichssubstanz (A).

Beispiel B

Wuchshemmung bei Sommerweizen

Lösungsmittel: 30 Gewichtsteile Dimethylformamid

Emulgator: 1 Gewichtsteil Polyoxyethylen-Sorbitan-Monolaurat

Zur Herstellung einer zweckmässigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Sommerweizenpflanzen werden im Gewächshaus bis zum Erscheinen des letzten Blattes angezogen. In diesem Stadium werden die Pflanzen tropfnass mit den Wirkstoffzubereitungen besprüht. Nach 3 Wochen wird bei allen Pflanzen der Zuwachs gemessen und die Wuchshemmung in Prozent des Zuwachses der Kontrollpflanzen berechnet. Es bedeuten 100% Wuchshemmung den Stillstand des Wachstums und 0% ein Wachstum entsprechend dem der Kontrollpflanzen.

In diesem Test zeigt die Verbindung gemäss Beispiel (1) eine deutlich bessere Wirksamkeit als die Vergleichssubstanz (A).

Beispiel C

Stimulierung der $CO_2$-Fixierung bei Sojabohnen

Lösungsmittel: 30 Gewichtsteile Dimethylformamid

Emulgator: 1 Gewichtsteil Polyoxyethylen-Sorbitan-Monolaurat

Zur Herstellung einer zweckmässigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Sojabohnenpflanzen werden im Gewächshaus bis zur vollen Entfaltung des ersten Folgeblattes angezogen. In diesem Stadium werden die Pflanzen tropfnass mit den Wirkstoffzubereitungen besprüht. Im weiteren Verlauf des Experimentes wird die CO-Fixierung der Pflanzen mit üblichen Methoden gemessen. Die Werte werden mit denen nicht mit Wirkstoffen behandelter Kontrollpflanzen verglichen.

Es bedeuten:

- – Hemmung der $CO_2$-Fixierung
- 0 $CO_2$-Fixierung wie bei der Kontrolle
- \+ geringe Stimulierung der $CO_2$-Fixierung
- ++ starke Stimulierung der $CO_2$-Fixierung
- +++ sehr starke Stimulierung der $CO_2$-Fixierung

In diesem Test zeigen die Verbindungen gemäss Beispielen (1) und (2) eine deutlich bessere Wirksamkeit als die Vergleichssubstanz (A).

**Patentansprüche**

1. Methylamino-cyclopropan-1-carbonsäure-Derivate der Formel

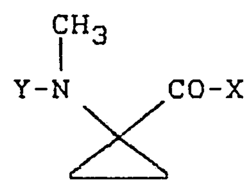

(I)

in welcher

X für Hydroxy, gegebenenfalls durch Hydroxy, Halogen, Amino, Alkylamino mit 1 bis 4 Kohlenstoffatomen, Dialkylamino mit 1 bis 4 Kohlenstoffatomen je Alkylgruppe, N-Acylamino, Alkoxy mit 1 bis 4 Kohlenstoffatomen, Acyloxy, Cycloalkyl mit 3 bis 7 Kohlenstoffatomen und/oder Phenyl substituiertes Alkoxy mit 1 bis 18 Kohlenstoffatomen, ferner für Amino oder Alkylamino mit 1 bis 4 Kohlenstoffatomen steht und

Y für Wasserstoff oder Formyl steht,

sowie deren pflanzenverträgliche Säureadditions-Salze.

2. Verfahren zur Herstellung von 1-Methylamino-cyclopropan-1-carbonsäure-Derivaten der Formel

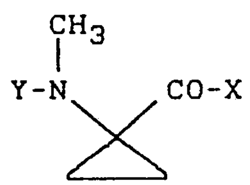

(I)

in welcher
X für Hydroxy, gegebenenfalls durch Hydroxy, Halogen, Amino, Alkylamino mit 1 bis 4 Kohlenstoffatomen, Dialkylamino mit 1 bis 4 Kohlenstoffatomen je Alkylgruppe, N-Acylamino, Alkoxy mit 1 bis 4 Kohlenstoffatomen, Acryloxy, Cycloalkyl mit 3 bis 7 Kohlenstoffatomen und/oder Phenyl substituiertes Alkoxy mit 1 bis 18 Kohlenstoffatomen, ferner für Amino oder Alkylamino mit 1 bis 4 Kohlenstoffatomen steht und
Y für Wasserstoff oder Formyl steht,
sowie von deren pflanzenverträglichen Säureadditionssalzen, dadurch gekennzeichnet, dass man

a) 1-Acylamino-Cyclopropan-1-carbonsäureester der Formel

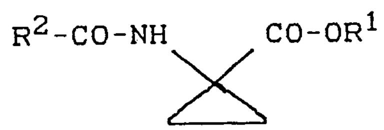

(II)

in welcher
$R^1$ für Methyl oder Ethyl steht und
$R^2$ für Wasserstoff steht,
mit einem Methylierungsmittel der Formel

$CH_3$-Z (III)

Z für Halogen, einen Methylsulfat-, p-Toluolsulfonat- oder für einen Mesitylensulfonat-Rest steht, gegebenenfalls in Gegenwart eines Verdünnungsmittels und gegebenenfalls in Gegenwart eines Säurebindemittels umsetzt, oder

b) 1-(N-Acyl-methylamino)-cyclopropan-1-carbonsäureester der Formel

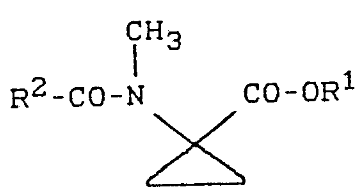

(Ia)

in welcher
$R^1$ und $R^2$ die oben angegebene Bedeutung haben, mit wässriger Salzsäure gegebenenfalls in Gegenwart eines Verdünnungsmittels umsetzt, oder

c) 1-(N-Formyl-methylamino)-cyclopropan-1-carbonsäure-Derivate der Formel

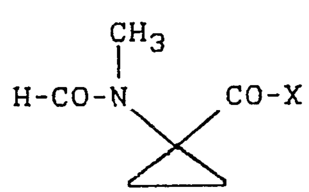

(Id)

in welcher
X die oben angegebene Bedeutung hat,
mit wässriger Salzsäure gegebenenfalls in Gegenwart eines Verdünnungsmittels umsetzt, oder

d) Verbindungen der Formel

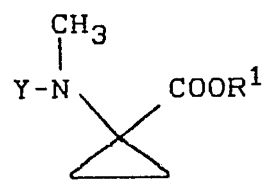

(If)

in welcher
Y und $R^1$ die oben angegebene Bedeutung haben,

α) mit Alkoholen der Formel (IV),

$R^3$OH (IV)

in welcher
$R^3$ für gegebenenfalls durch Hydroxy, Halogen, Amino, Alkylamino mit 1 bis 4 Kohlenstoffatomen, Dialkylamino mit 1 bis 4 Kohlenstoffatomen je Alkylgruppe, Acylamino, Alkoxy mit 1 bis 4 Kohlenstoffatomen, Acyloxy, Cycloalkyl mit 3 bis 7 Kohlenstoffatomen und/oder Phenyl substituiertes Alkoxy mit 1 bis 18 Kohlenstoffatomen steht, gegebenenfalls in Gegenwart eines Verdünnungsmittels und gegebenenfalls in Gegenwart eines Katalysators umsetzt, oder

β) mit Aminen der Formel (V)

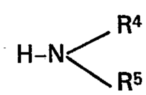

(V)

in welcher
$R^4$ für Wasserstoff steht und
$R^5$ für Wasserstoff oder Alkyl mit bis zu 4 Kohlenstoffatomen steht,
gegebenenfalls in Gegenwart eines Verdünnungsmittels umsetzt, oder

e) 1-Methylamino-cyclopropan-1-carbonsäure-Derivate der Formel

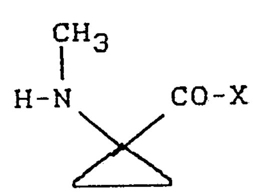

(Ih)

in welcher
X die oben angegebene Bedeutung hat,
mit einem Acylierungsmittel der Formel (VI)

$Y^1$-A (VI)

in welcher
$Y^1$ für Formyl steht und
A für Halogen, Aktivester-Reste, Anhydrid-Reste oder für den N,N′-Dicyclohexylcarbodiimid-Addukt-Rest der Formel

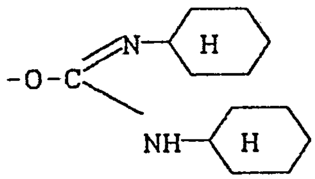

steht,

gegebenenfalls in Gegenwart eines Verdünnungsmittels und gegebenenfalls in Gegenwart eines Säurebindemittels sowie gegebenenfalls in Gegenwart eines Katalysators umsetzt, oder

f) 1-Methylamino-cyclopropan-1-carbonsäuren der Formel

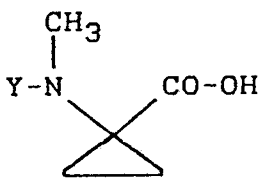

(Ij)

in welcher

Y die oben angegebene Bedeutung hat,

α) mit Alkoholen der Formel (IV)

$R^3$–OH (IV)

in welcher

$R^3$ die oben angegebene Bedeutung hat,

gegebenenfalls in Gegenwart eines Verdünnungsmittels, gegebenenfalls in Gegenwart eines Säurebindemittels und gegebenenfalls in Gegenwart eines geeigneten Aktivierungsmittels oder Katalysators umsetzt, oder

β) mit Aminen der Formel (V)

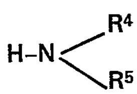

(V)

in welcher

$R^4$ und $R^5$ die oben angegebene Bedeutung haben,

gegebenenfalls in Gegenwart eines Verdünnungsmittels, gegebenenfalls in Gegenwart eines Säurebindemittels und gegebenenfalls in Gegenwart eines geeigneten Aktivierungsmittels umsetzt, oder

g) 1-Methylamino-cyclopropan-1-carbonsäure-Salze der Formel

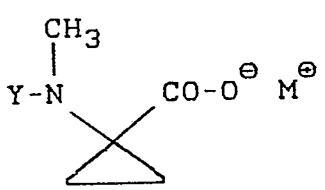

(II)

in welcher

Y die oben angegebene Bedeutung hat und

$M^{\oplus}$ für ein Natrium- oder Kaliumion steht,

mit einer Verbindung der Formel (VIII)

$R^3$–Z (VIII)

in welcher

$R^3$ und Z die oben angegebene Bedeutung haben, gegebenenfalls in Gegenwart eines Verdünnungsmittels umsetzt, und gegebenenfalls anschliessend an die Verbindungen der Formel (I) eine Säure addiert, die zu einem pflanzenverträglichen Salz führt.

3. Pflanzenwuchsregulierende Mittel, gekennzeichnet, durch einen Gehalt an mindestens einem 1-Methylamino-cyclopropan-1-carbonsäure-Derivat der Formel (I) bzw. einem pflanzenverträglichen Säureadditionssalz eines 1-Methylamino-cyclopropan-1-carbonsäure-Derivates der Formel (I).

4. Verfahren zur Regulierung des Pflanzenwachstums, *dadurch gekennzeichnet, dass man* 1-Methylamino-cyclopropan-1-carbonsäure-Derivate der Formel (I) bzw. deren pflanzenverträgliche Säureadditionssalze auf die Pflanzen und/oder deren Lebensraum ausbringt.

5. Verwendung von 1-Methylamino-cyclopropan-1-carbonsäure-Derivaten der Formel (I) bzw. von deren pflanzenverträglichen Säureadditionssalzen zur Regulierung des Pflanzenwachstums.

6. Verfahren zur Herstellung von pflanzenwuchsregulierenden Mitteln, dadurch gekennzeichnet, dass man 1-Methylamino-cyclopropan-1-carbonsäure-Derivate der Formel (I) bzw. deren pflanzenverträgliche Säureadditionssalze mit Streckmitteln und/oder oberflächenaktiven Stoffen vermischt.

7. 1-Methylamino-cyclopropan-1-carbonsäure-Derivat der Formel

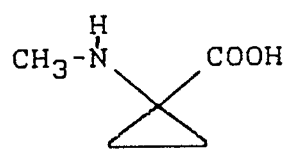

8. 1-Methylamino-cyclopropan-1-carbonsäure-Derivat der Formel

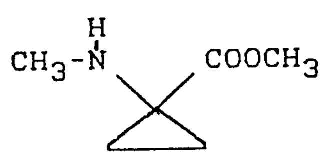

× HCl

9. 1-Methylamino-cyclopropan-1-carbonsäure-Derivat der Formel

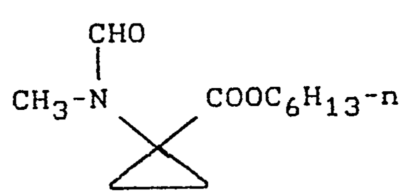

**Claims**

1. Methylamino-cyclopropan-1-carboxylic acid derivatives of the formula

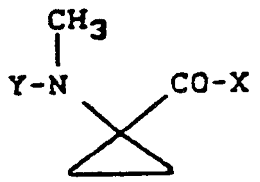

(I)

in which
X represents hydroxyl, or alkoxy which has 1 to 18 carbon atoms and is optionally substituted by hydroxyl, halogen, amino, alkylamino having 1 to 4 carbon atoms, dialkylamino having 1 to 4 carbon atoms per alkyl group, N-acylamino, alkoxy having 1 to 4 carbon atoms, acyloxy, cycloalkyl having 3 to 7 carbon atoms and/or phenyl, or represents amino or alkylamino having 1 to 4 carbon atoms and y represents hydrogen or formyl, and their plant-tolerated acid addition salts.

2. Process for the preparation of 1-methylamino-cyclopropane-1-carboxylic acid derivatives of the formula

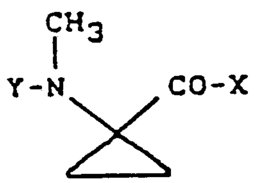

(I)

in which
X represents hydroxyl, or alkoxy which has 1 to 18 carbon atoms and is optionally substituted by hydroxyl, halogen, amino, alkylamino having 1 to 4 carbon atoms, dialkylamino having 1 to 4 carbon atoms per alkyl group, N-acylamino, alkoxy having 1 to 4 carbon atoms, acyloxy, cycloalkyl having 3 to 7 carbon atoms and/or phenyl, or represents amino or alkylamino having 1 to 4 carbon atoms and y represents hydrogen or formyl, and of their plant-tolerated acid addition salts, characterized in that

a) 1-acylamino-cyclopropane-1-carboxylic acid esters of the formula

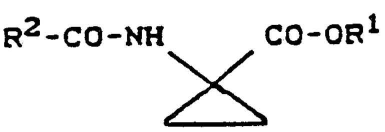

(II)

in which
$R^1$ represents methyl or ethyl and
$R^2$ repesents hydrogen,
are reacted with a methylating agent of the formula

$CH_3$-Z (III)

Z represents halogen, a methyl sulphate, p-toluene sulphonate or mesitylene sulphonate radical, if appropriate in the presence of a diluent and, if appropriate, in the presence of an acid-binding agent, or

b) 1-(N-acyl-methylamino)-cyclopropane-1-carboxylic acid esters of the formula

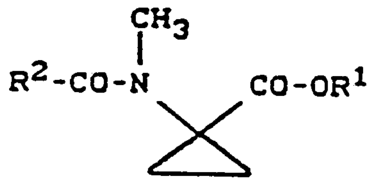

(Ia)

in which
$R^1$ and $R^2$ have the meaning given above, are reacted with aqueous hydrochloric acid, if appropriate in the presence of a diluent, or

c) 1-(N-formyl-methylamino)-cyclopropane-1-carboxylic acid derivatives of the formula

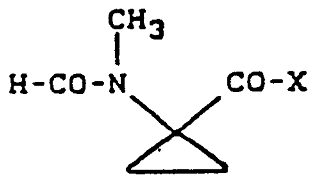

(Id)

in which
X has the meaning given above, are reacted with aqueous hydrochloric acid, if appropriate in the presence of a diluent, or

d) compounds of the formula

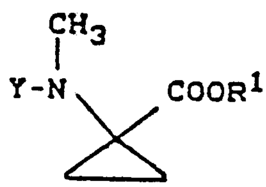

(If)

in which
Y and $R^1$ have the meaning given above,

α) are reacted with alcohols of the formula (IV)

$R^3OH$ (IV)

in which
$R^3$ represents alkoxy which has 1 to 18 carbon atoms and is optionally substituted by hydroxyl, halogen, amino, alkylamino having 1 to 4 carbon atoms, dialkylamino having 1 to 4 carbon atoms per per alkyl group, acylamino, alkoxy having 1 to 4 carbon atoms, acyloxy, cycloalkyl having 3 to 7 carbon atoms and/or phenyl, if appropriate in the presence of a diluent and, if appropriate, in the presence of a catalyst, or

β) are reacted with amines of the formula (V)

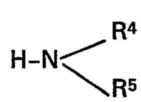

(V)

in which
$R^4$ represents hydrogen and
$R^5$ represents hydrogen or alkyl having up to 4 carbon atoms, if appropriate in the presence of a diluent, or

e) 1-methylamino-cyclopropan-1-carboxylic acid derivatives of the formula

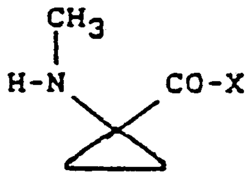

(Ih)

in which

X has the meaning given above, are reacted with an acylating agent of the formula (VI)

$Y^1$-A (VI)

in which

$Y^1$ represents formyl and

A represents halogen, active ester radicals, anhydride radicals or the N,N′-dicyclohexylcarbodiimide adduct radical of the formula

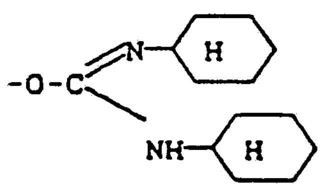

if appropriate in the presence of a diluent and, if appropriate, in the presence of an acid-binding agent and, if appropriate, in the presence of a catalyst, or

f) 1-methylamino-cyclopropane-1-carboxylic acids of the formula

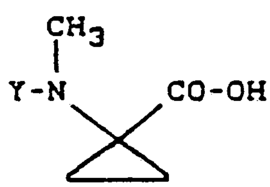

(Ij)

in which

Y has the meaning given above,

α) are reacted with alcohols of the formula (IV)

in which

$R^3$ has the meaning given above, if appropriate in the presence of a diluent, if appopriate in the presence of an acid-binding agent and, if appropirate, in the presence of a suitable activating agent or catalyst or

β) are reacted with amines of the formula (V)

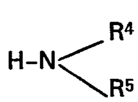

(V)

in which

$R^4$ and $R^5$ have the meaning given above, if appropriate in the presence of a diluent, if appropriate in the presence of an acid-binding agent and, if appropriate, in the presence of a suitable activating agent, or

g) 1-methylamino-cyclopropane-1-carboxylate salts of the formula

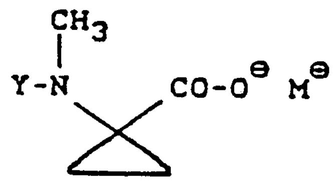

(IL)

in which

Y has the meaning given above and

$M^{\oplus}$ represents a sodium or potassium ion, are reacted with a compound of the formula (VIII)

$R^3$-Z (VIII)

in which

$R^3$ and Z have the meaning given above, if appropriate in the presence of a diluent, and, if required, the compounds of the formula (I) are then subjected to an addition reaction with an acid which leads to a plant-tolerated salt.

3. Plant growth-regulating agents, characterized in that they contain at least one 1-methylamino-cyclopropane-1-carboxylic acid derivative of the formula (I) or one plant-tolerated acid addition salt of a 1-methylamino-cyclopropane-1-carboxylic acid derivative of the formula (I).

4. Process for regulating plant growth, characterized in that 1-methylamino-cyclopropane-1-carboxylic acid derivatives of the formula (I) or their plant-tolerated acid addition salts are applied to the plants and/or their habitat.

5. Use of 1-methylamino-cyclopropane-1-carboxylic acid derivatives of the formula (I) or of their plant-tolerated acid addition salts for regulating plant growth.

6. Process for the preparation of plant growth-regulating agents, characterized in that 1-methylamino-cyclopropane-1-carboxylic acid derivatives of the formula (I) or their plant-tolerated acid addition salts are mixed with extenders and/or surface-active substances.

7. 1-Methylamino-cyclopropan-1-carboxylic acid derivative of the formula

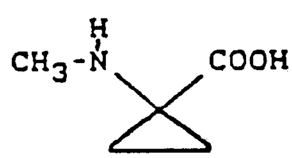

8. 1-Methylamino-cyclopropan-1-carboxylic acid derivative of the formula

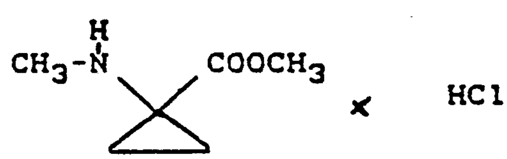

9. 1-Methylamino-cyclopropan-1-carboxylic acid derivative of the formula

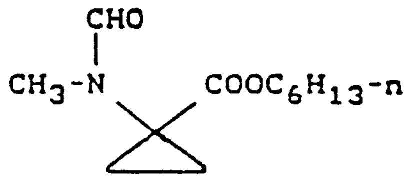

## Revendications

1. Dérivés d'acide méthylamino-cyclopropane-1-carboxylique de formule:

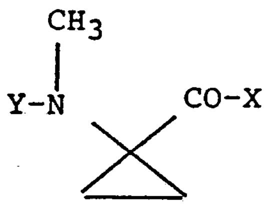

(I)

dans laquelle
X représente un hydroxy, un alcoxy ayant 1 à 18 atomes de carbone éventuellement substitué par un hydroxyle, de l'halogène, un amino, un alcoylamino ayant 1 à 4 atomes de carbone, un dialcoylamino ayant 1 à 4 atomes de carbone par groupe alcoyle, un N-acylamino, un alcoxy ayant 1 à 4 atomes de carbone, un acyloxy, un cycloalcoyle ayant 3 à 7 atomes de carbone et/ou un phényle, en outre un amino ou alcoylamino ayant 1 à 4 atomes de carbone et
Y de l'hydrogène ou un formyle, de même que leurs sels d'addition d'acides tolérés par les plantes.

2. Procédé de fabrication de dérivés d'acide 1-méthylamino-cyclopropane-1-carboxylique de formule:

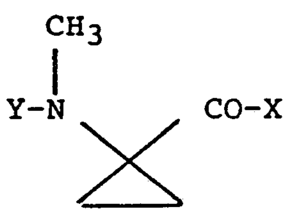

(I)

dans laquelle
X représente un hydroxy, un alcoxy ayant 1 à 18 atomes de carbone éventuellement substitué par un hydroxyle, de l'halogène, un amino, un alcoylamino ayant 1 à 4 atomes de carbone, un dialcoylamino ayant 1 à 4 atomes de carbone par groupe alcoyle, un N-acylamino, un alcoxy ayant 1 à 4 atomes de carbone, un acyloxy, un cycloalcoyle ayant 3 à 7 atomes de carbone et/ou un phényle, en outre un amino ou alcoylamino ayant 1 à 4 atomes de carbone et
Y de l'hydrogène ou un formyle, de même que de leurs sels d'addition d'acides tolérés par les plantes, caractérisé en ce que

a) on fait réagir un ester d'acide l'acylamino-cyclopropane-1-carboxylique de formule:

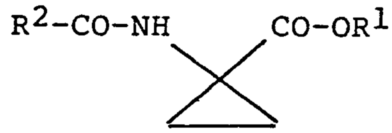

(II)

dans laquelle
$R^1$ représente un méthyle ou un éthyle et
$R^2$ de l'hydrogène,
avec un agent de méthylation de formule:

$CH_3$-Z (III)

Z représentant de l'halogène, un radical méthylsulfate, p-toluène-sulfonate ou mésitylène-sulfonate,
éventuellement en présence d'un diluant et éventuellement en présence d'un agent fixateur d'acide, ou

b) on fait réagir un ester d'acide 1-(N-acyl-méthylamino)-cyclopropane-1-carboxylique de formule:

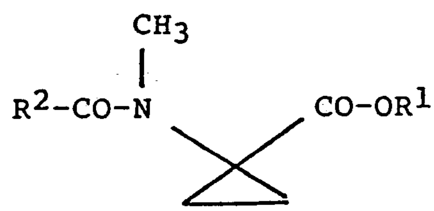

(Ia)

dans laquelle

$R^1$ et $R^2$ ont la signification indiquée plus haut, avec de l'acide chlorhydrique aqueux éventuellement en présence d'un diluant, ou

c) on fait réagir des dérivés d'acide 1-(N-formyl-méthylamino)-cyclopropane-1-carboxylique de formule:

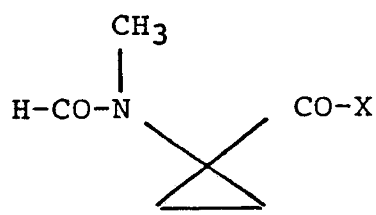

(Id)

dans laquelle
X a la signification indiquée plus haut, avec de l'acide chlorhydride aqueux éventuellement en présence d'un diluant, ou

d) on fait réagir des composés de formule:

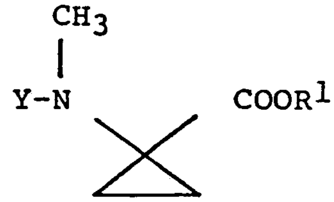

(If)

dans laquelle
Y et $R^1$ ont la signification indiquée plus haut,

α) avec des alcools de formule (IV),

$R^3OH$ (IV)

dans laquelle
$R^3$ représente un alcoxy ayant 1 à 18 atomes de carbone éventuellement substitué par un hydroxy, de l'halogène, un amino, un alcoylamino ayant 1 à 4 atomes de carbone, un dialcoylamino ayant 1 à 4 atomes de carbone par groupe alcoyle, un acylamino, un alcoxy ayant 1 à 4 atomes de carbone, un acyloxy, un cycloalcoyle ayant 3 à 7 atomes de carbone et/ou un phényle, éventuellement en présence d'un diluant et éventuellement en présence d'un catalyseur, ou

β) avec des amines de formule (V)

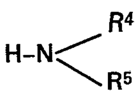
(V)

dans laquelle
$R^4$ représente de l'hydrogène et
$R^5$ de l'hydrogène ou un alcoyle ayant jusqu'à 4 atomes de carbone, éventuellement en présence d'un diluant, ou

e) on fait réagir des dérivés d'acide 1-méthylamino-cyclopropane-1-carboxylique de formule:

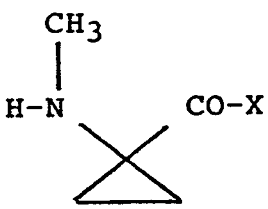
(Ih)

dans laquelle
X a la signification indiquée plus haut, avec un agent d'acylation de formule (VI)

$Y^1$-A (VI)

dans laquelle
$Y^1$ représente un formyle et
A de l'halogène, des radicaux ester activés, des radicaux anhydride ou le radical-produit d'addition N,N'-dicyclohexylcarbodiimide de formule:

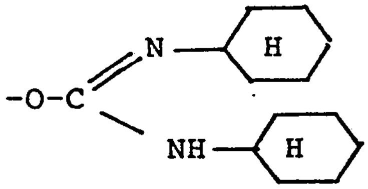

éventuellement en présence d'un diluant et éventuellement en présence d'un agent fixateur d'acide de même qu'éventuellement en présence d'un catalysateur, ou

f) on fait réagir des acides 1-méthylamino-cyclopropane-1-carboxylique de formule:

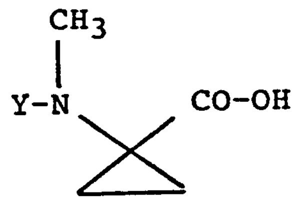
(Ij)

dans laquelle
Y a la signification indiquée plus haut,

α) avec des alcools de formule (IV)

$R^3$-OH (IV)

dans laquelle
$R^3$ *a la signification indiquée plus haut,* éventuellement en présence d'un diluant, éventuellement en présence d'un agent fixateur d'acide et éventuellement en présence d'un agent d'activation approprié ou d'un catalyseur, ou

β) avec des amines de formule (V)

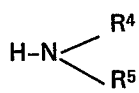
(V)

dans laquelle
$R^4$ et $R^5$ ont la signification indiquée plus haut, éventuellement en présence d'un diluant, éventuellement en présence d'un agent fixateur d'acide et éventuellement en présence d'un agent d'activation approprié, ou

g) on fait réagir des sels d'acide 1-méthylamino-cyclopropane-1-carboxylique de formule:

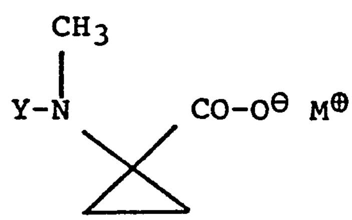
(Il)

dans laquelle
Y a la signification indiquée plus haut
$M^{\oplus}$ représente un ion sodium ou potassium, avec un composé de formule (VIII)

$R^3$-Z (VIII)

dans laquelle
$R^3$ et Z ont la signification indiquée plus haut, éventuellement en présence d'un diluant, et en ce qu'éventuellement on fixe ensuite sur les composés de formule (I) un acide, qui conduit à un sel toléré par les plantes.

3. Agents régulateurs de la croissance des plantes, caractérisés par une teneur en au moins un dérivé d'acide 1-méthylamino-cyclopropane-1-carboxylique de formule (I) ou d'un sel d'addition d'acide toléré par les plantes d'un dérivé d'acide 1-méthylamino-cyclopropane-1-carboxylique de formule (I).

4. Procédé de régulation de la croissance des plantes, caractérisé en ce qu'on applique des dérivés d'acide 1-méthylamino-cyclopropane-1-carboxylique de formule (I) ou leurs sels d'addition d'acides toléré par les plantes sur les plantes et/ou sur leur espace vital.

5. Utilisation de dérivés d'acide 1-méthylamino-cyclopropane-1-carboxylique de formule (I) ou de leurs sels d'additon d'acides toléré par les plantes pour la régulation de la croissance des plantes.

6. Procédé de fabrication d'agents régulateurs de la croissance des plantes, caractérisé en ce qu'on mélange des dérivés d'acide 1-méthylamino-cyclopropane-1-carboxylique de formule (I) ou leurs sels d'addition d'acides toléré par les plantes avec des diluants et/ou des substances tensioactives.

7. Dérivé d'acide 1-méthylamino-cyclopropane-1-carboxylique de formule:

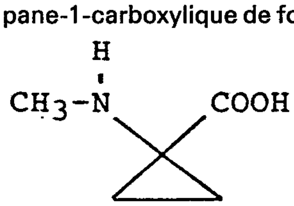

8. Dérivé d'acide 1-méthylamino-cyclopropane-1-carboxylique de formule:

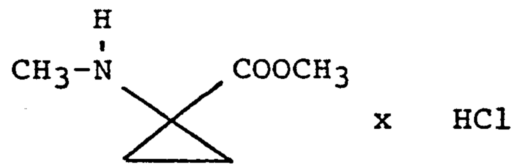

9. Dérivé d'acide 1-méthylamino-cyclopropane-1-carboxylique de formule: